# EUROPÄISCHE PATENTSCHRIFT

(11) **EP 0 754 735 B1**
(45) Veröffentlichungstag und Bekanntmachung des Hinweises auf die Patenterteilung: **07.03.2001**
(21) Anmeldenummer: 96108842.4
(22) Anmeldetag: 01.06.1996
(51) Int. Cl.: C09C 1/50, B60C 1/00, C08K 3/04

(54) **Furnacerusse und Verfahren zu ihrer Herstellung**
Furnace black and process for its manufacturing
Noir de four et son procédé de fabrication

(30) Priorität: 19.06.1995 DE 19521565
(43) Veröffentlichungstag der Anmeldung: 22.01.1997
(73) Patentinhaber: Degussa-Hüls Aktiengesellschaft, 60287 Frankfurt am Main (DE)
(72) Erfinder: Freund, Burkhard, Dr., 50374 Erftstadt (DE); Kühner, Gerhard, Dr., 63457 Hanau (DE); Sattler, Ulrich, Dr., 50374 Erftstadt (DE); Vogel, Karl, Dr., 63755 Alzenau (DE)

(56) Entgegenhaltungen:
- WO-A-94/21720
- DE-A- 3 426 864
- US-A- 5 179 154
- US-A- 5 190 739
- DATABASE WPI Week 9521 Derwent Publications Ltd., London, GB; AN 95-159098 XP002061698 & JP 07 082 421 A (YOKOHAMA RUBBER CO.) , 28.März 1995

## Beschreibung

Die vorliegende Erfindung betrifft verbesserte Furnaceruße sowie ein Verfahren zu ihrer Herstellung.

Furnaceruße werden in großem Maße als Verstärkerruße in Gummimischungen für die Reifenindustrie eingesetzt. Die Eigenschaften der Ruße beeinflussen dabei in Verbindung mit den Eigenschaften der eingesetzten Gummimischungen die Gebrauchseigenschaften der fertigen Reifen.

Gefordert werden ein hoher Abriebswiderstand, ein möglichst geringer Rollwiderstand sowie ein möglichst gutes Naßrutschverhalten. Die beiden letzteren Eigenschaften werden wesentlich durch das viskoelastische Verhalten der Laufflächenmischung beeinflußt. Bei periodischer Verformung kann das viskoelastische Verhalten durch den mechanischen Verlustfaktor tanδ und im Falle von Dehnung oder Stauchung durch den dynamischen Dehnmodul |E*| beschrieben werden. Beide Größen sind stark temperaturabhängig. Das Naßrutschverhalten der Laufflächenmischung wird dabei gemeinhin mit dem Verlustfaktor tanδ₀ bei etwa 0°C, der Rollwiderstand mit dem Verlustfaktor tanδ₆₀ bei etwa 60°C korreliert. Je höher der Verlustfaktor bei der tiefen Temperatur ist, um so besser ist gewöhnlich das Naßrutschverhalten der Reifenmischung. Zur Verminderung des Rollwiderstandes wird dagegen ein möglichst kleiner Verlustfaktor bei der hohen Temperatur gefordert.

Der Abriebwiderstand und die viskoelastischen Eigenschaften, also auch der Verlustfaktor der Laufflächenmischungen, werden wesentlich durch die Eigenschaften der eingesetzten Verstärkerruße bestimmt. Die wesentliche Einflußgröße ist hierbei die spezifische Oberfläche, insbesondere die CTAB-Oberfläche, welche ein Maß für die kautschukwirksamen Oberflächenanteile des Rußes ist. Mit zunehmender CTAB-Oberfläche steigen Abriebwiderstand und tanδ an.

Weitere wichtige Rußparameter sind die DBP-Absorption und die 24M4-DBP-Absorption als Maßzahlen für die Ausgangsstruktur, beziehungsweise die nach mechanischer Beanspruchung des Rußes noch verbleibende Reststruktur.

Für Laufflächenmischungen sind Ruße geeignet, die CTAB-Oberflächen zwischen 80 und 180 m²/g und 24M4-DBP-Absorptionswerte zwischen 80 und 140 ml/100 g aufweisen.

Die mittlere Teilchengröße dient zur Klassifizierung der Ruße gemäß ASTM D-1765. Es handelt sich dabei um eine vierstellige alphanumerische Nomenklatur, wobei der erste Buchstabe (ein N oder ein S) eine Aussage über die Vulkanisationseigenschaften macht, während die erste Ziffer der nachfolgenden dreistelligen Zahl eine Information über die mittlere Teilchengröße gibt. Diese ASTM-Klassifizierung ist allerdings sehr grob. So kann es innerhalb eines dieser ASTM-Klassifierungsbereiche zu erheblich abweichenden viskoelastischen Eigenschaften der Laufflächenmischungen kommen.

Es hat sich gezeigt, daß herkömmliche Ruße die Temperaturabhängigkeit des Verlustfaktors tanδ nicht in ausreichendem Maße derart beeinflussen können, daß die Laufflächenmischung bei gleichem oder besserem Naßrutschverhalten einen geringeren Rollwiderstand aufweist. Die erwünschte Verringerung des Rollwiderstandes ist im allgemeinen direkt mit einer Verschlechterung des Naßrutschverhaltens gekoppelt. Ruße, die einen geringen Rollwiderstand aufweisen, werden als sogenannte "low hysteresis"-Ruße bezeichnet.

Wünschenswert sind somit Ruße, die bei sonst gleichen oder ähnlichen rußanalytischen Kenndaten, insbesondere gleicher CTAB-Oberfläche, nach Einarbeitung in eine Gummimischung dieser Gummimischung einen geringeren tanδ₆₀-Wert und einen gleichen oder größeren tanδ₀-Wert verleihen. Das Verhältnis dieser beiden Werte tanδ₀/tanδ₆₀ sollte somit größer als bei herkömmlichen Rußen mit gleicher CTAB-Oberfläche sein.

Die DE 43 08 488 A1 offenbart mit Ruß verstärkte Gummimischungen, die ein "steileres" tanδ-Temperaturprofil aufweisen sollen. Diese Aussage bezieht sich auf den Vergleich zweier Gummimischungen, wobei die erste unter Verwendung eines erfindungsgemäß einzusetzenden Rußes und die zweite unter Verwendung eines Standardrußes N339 hergestellt wurde. Der Standardruß N339 weist allerdings mit 91 m²/g eine doppelt so große CTAB-Oberfläche auf, wie der erfindungsgemäß einzusetzende Ruß. Der erfindungsgemäß zu verwendende Ruß verleiht daher der Laufflächenmischung oberflächenbedingt einen sehr viel geringeren Abriebwiderstand und kommt somit als Laufflächenruß nicht in Frage. Bei Verwendung eines Standardrußes mit gleicher CTAB-Oberfläche wie der erfindungsgemäß zu verwendende Ruß kann dagegen kein steileres Temperaturprofil beobachtet werden. Mit der offenbarten Gummimischung wird also nicht das obige Problem gelöst.

Ruße für die Reifenindustrie werden heute fast ausschließlich nach dem Furnacerußverfahren hergestellt. Diese Herstellung beruht auf dem Prinzip der oxidativen Pyrolyse, d.h. der unvollständigen Verbrennung, von Rußrohstoffen in einem mit hochfeuerfestem Material ausgekleideten Reaktor. Als Rußrohstoff werden sogenannte Rußöle eingesetzt, aber auch gasförmige Kohlenwasserstoffe können allein oder gleichzeitig mit Rußöl verwendet werden. Unabhängig von der speziellen Bauform des Reaktors können drei Zonen im Rußreaktor unterschieden werden, die drei verschiedenen Stufen der Rußerzeugung entsprechen. Die Zonen liegen längs der Reaktorachse hintereinander und werden nacheinander von den Reaktionsmedien durchströmt.

Die erste Zone, die sogenannte Verbrennungszone, umfaßt im wesentlichen die Brennkammer des Reaktors. Hier wird ein heißes Brennkammer-Abgas erzeugt, indem ein Brennstoff, in der Regel Kohlenwasserstoffe, mit einem Überschuß von vorgewärmter Verbrennungsluft oder anderen sauerstoffhaltigen Gasen verbrannt wird. Als Brennstoff wird heute überwiegend Erdgas verwendet, aber auch flüssige Kohlenwasserstoffe wie leichtes und schweres Heizöl können eingesetzt werden. Die Verbrennung des Brennstoffes erfolgt gewöhnlich unter Sauerstoffüberschuß. Nach dem Buch "Carbon Black", 2nd Edition, Marcel Dekker Inc., New York 1993, Seite 20 ist es für die Erzielung einer optimalen Energieausnutzung entscheidend, daß ein möglichst vollständiger Umsatz des Brennstoffes zu Kohlendioxid und Wasser in der Brennkammer erfolgt. Der Luftüberschuß fördert dabei den vollständigen Umsatz des Brennstoffes. Der Brennstoff wird gewöhnlich mittels einer oder mehrerer Brennerlanzen in die Brennkammer eingeführt.

Als Meßzahl zur Kennzeichnung des Luftüberschusses wird häufig der sogenannte K-Faktor verwendet. Es handelt sich bei dem K-Faktor um das Verhältnis der für eine stöchiometriche Verbrennung des Brennstoffes benötigten Luftmenge zu der tatsächlich der Verbrennung zugeführten Luftmenge. Ein K-Faktor von 1 bedeutet also eine stöchiometrische Verbrennung. Bei Luftüberschuß ist der K-Faktor kleiner 1. Üblicherweise wird mit K-Faktoren zwischen 0,3 und 0,9 gearbeitet.

In der zweiten Zone des Rußreaktors, der sogenannten Reaktionszone, findet die Rußbildung statt. Dazu wird der Rußrohstoff in den Strom des heißen Abgases injiziert und eingemischt. Bezogen auf die in der Verbrennungszone nicht vollständig umgesetzte Sauerstoffmenge ist die in der Reaktionszone eingebrachte Kohlenwasserstoffmenge im Überschuß. Daher setzt hier normalerweise die Rußbildung ein.

Rußöl kann auf verschiedene Art in den Reaktor injiziert werden. Geeignet ist zum Beispiel eine axiale Ölinjektionslanze oder eine, beziehungsweise-mehrere, radiale Öllanzen, die in einer Ebene senkrecht zur Strömungsrichtung auf dem Umfang des Reaktors angeordnet sind. Ein Reaktor kann längs der Strömungsrichtung mehrere Ebenen mit radialen Öllanzen aufweisen. Am Kopf der Öllanzen befinden sich entweder Sprüh- oder Spritzdüsen, mit denen das Rußöl in den Strom des Abgases eingemischt wird.

Bei gleichzeitiger Verwendung von Rußöl und gasförmigen Kohlenwasserstoffen, wie zum Beispiel Methan, als Rußrohstoff, können die gasförmigen Kohlenwasserstoffe getrennt vom Rußöl über einen eigenen Satz von Gaslanzen in den Strom des heißen Abgases injiziert werden.

In der dritten Zone des Rußreaktors, der sogenannten Abbruchzone (Quenchzone), wird die Rußbildung durch schnelles Abkühlen des rußhaltigen Prozeßgases abgebrochen. Dadurch werden unerwünschte Nachreaktionen vermieden. Solche Nachreaktionen würden zu porösen Rußen führen. Den Reaktionsabbruch erreicht man gewöhnlich durch Einsprühen von Wasser mittels geeigneter Sprühdüsen. Meist weist der Rußreaktor mehrere Stellen längs des Reaktors für das Einsprühen von Wasser, beziehungsweise "Quenchen", auf, so daß man die Verweilzeit des Rußes in der Reaktionszone variieren kann. In einem nachgeschalteten Wärmetauscher wird die Restwärme des Prozeßgases genutzt, um die Verbrennungsluft vorzuwärmen.

Es ist eine Vielzahl von verschiedenen Reaktorformen bekannt geworden. Die beschriebenen Varianten betreffen alle drei Reaktorzonen, wobei sich besonders viele Ausbildungsformen auf die Reaktionszone und die Anordnung der Injektionslanzen für den Rußrohstoff beziehen. Moderne Reaktoren weisen meist mehrere Ölinjektionslanzen auf, die sowohl über den Umfang des Reaktors als auch längs der Reaktorachse verteilt sind. Die auf mehrere Einzelströme aufgeteilte Rußölmenge kann besser in den aus der Brennkammer strömenden Strom heißen Brennkammer-Abgases eingemischt werden. Durch längs der Strömungsrichtung örtlich verteilte Eingabestellen ist eine zeitliche Staffelung der Ölinjektion möglich.

Die Primärteilchengröße und damit auch die normalerweise leicht bestimmbare spezifische Rußoberfläche können durch die Menge des in das heiße Abgas injizierten Rußöles eingestellt werden. Werden die Mengen und die Temperaturen des in der Brennkammer erzeugten Abgases konstant gehalten, dann ist allein die Rußölmenge für die Primärteilchengröße beziehungsweise die spezifische Rußoberfläche verantwortlich. Größere Rußölmengen führen zu grobteiligeren Rußen mit niedrigeren spezifischen Oberflächen als geringere Rußölmengen. Zugleich mit der Veränderung der Rußölmenge ändert sich die Reaktionstemperatur: Da das eingesprühte Rußöl die Temperatur im Reaktor senkt, bedeuten größere Rußölmengen niedrigere Temperaturen und umgekehrt. Daraus folgt der in dem schon eingangs zitierten Buch "Carbon Black" auf Seite 34 beschriebene Zusammenhang zwischen Rußbildungstemperatur und spezifischer Rußoberfläche beziehungsweise Primärteilchengröße.

Wird das Rußöl auf zwei verschiedene Injektionsstellen, die längs der Reaktorachse gegeneinander versetzt sind, aufgeteilt, so ist an der ersten stromaufwärts liegenden Stelle die in dem Brennkammer-Abgas noch enthaltene Restsauerstoffmenge relativ zum eingesprühten Rußöl im Überschuß vorhanden. Die Rußbildung findet also an dieser Stelle bei höherer Temperatur statt als im Vergleich zu nachfolgenden Rußinjektionsstellen, d.h. an der ersten Injektionsstelle bilden sich stets feinteiligere Ruße mit höherer spezifischer Oberfläche als an einer nachfolgenden Injektionsstelle. Jede weitere Injektion von Rußölen führt zu weiteren Temperaturabsenkungen und zu Rußen mit größeren Primärteilchen. Solcher Art hergestellte Ruße weisen also eine Verbreiterung der Aggregatgrößen-Verteilungskurve auf und zeigen nach Einarbeitung in Gummi ein anderes Verhalten als Ruße mit einem sehr engen monomodalen Aggregatgrößenspektrum. Die breitere Aggregatgrößen-Verteilungskurve führt zu einem geringeren Verlustfaktor der Gummimischung, d.h. zu einer geringeren Hysterese, weshalb man auch von low hysteresis Rußen spricht. Ruße dieser Art, beziehungsweise Verfahren zu ihrer Herstellung, werden in den Patenten EP 0 315 442 und EP 0 519 988 beschrieben.

Die konventionellen Verfahren sind also in der Lage, durch längs der Reaktorachse versetztes Einsprühen des Rußöles Ruße mit einer breiteren Aggregatgrößen-Verteilungskurve zu erzeugen, die nach Einarbeitung in Gummimischungen diesen Gummimischungen einen verringerten Rollwiderstand verleihen.

Es ist Aufgabe der vorliegenden Erfindung, ein modifiziertes Furnacerußverfahren anzugeben, welches es gestattet, neuartige Ruße herzustellen, die sich bei sonst gleichen rußanalytischen Kenndaten in ihren gummitechnischen Eigenschaften von bekannten Rußen unterscheiden. Insbesondere sollen sich Gummimischungen unter Verwendung der neuartigen Ruße durch einen verminderten Rollwiderstand bei gleichzeitig mindestens gleichbleibendem, wenn nicht verbessertem Naßrutschverhalten auszeichnen.

Gegenstand der Erfindung ist ein Furnaceruß mit CTAB-Werten (ASTM D-3765) zwischen 80 und 180 m²/g und 24M4-DBP Absorption (ASTM D-3493) zwischen 80 und 140 ml/100g, welcher
**dadurch gekennzeichnet** ist,
daß für sein tanδ₀/tanδ₆₀-Verhältnis (DIN 53513) bei Einarbeitung in eine SSBR/BR-Gummimischung die Beziehung gilt

tanδ₀/tanδ₆₀ > 2,76 - 6,7 x 10 ⁻³ x CTAB

und der tanδ₆₀-Wert stets niedriger ist als der Wert für ASTM-Ruße mit gleicher CTAB-Oberfläche und 24M4-DBP Absorption.

Ein weitere Gegenstand der Erfindung ist ein Verfahren zur Herstellung von Furnaceruß in einem Rußreaktor, welcher längs der Reaktorachse eine Verbrennungszone, eine Reaktionszone und eine Abbruchzone enthält, durch Erzeugen eines Stromes heißen Abgases in der Verbrennungszone durch Verbrennen eines Brennstoffes in einem Sauerstoff enthaltenden Gas und Leiten des Abgases von der Verbrennungszone durch die Reaktionszone in die Abbruchzone, Einmischen eines Rußrohstoffes in das heiße Abgas in der Reaktionszone und Abstoppen der Rußbildung in der Abbruchzone durch Einsprühen von Wasser, welches
**dadurch gekennzeichnet** ist,
daß als Brennstoff Öl, ein Öl/Erdgasgemisch oder Erdgas allein verwendet und die Verbrennung des Brennstoffes so geführt wird, daß sich Keime in einer leicht rußenden Flamme bilden und der Rußrohstoff unmittelbar mit diesen Rußkeimen in Kontakt gebracht wird.

Während die konventionellen Furnacerußverfahren eine möglichst vollständige Verbrennung des Brennstoffes in der Brennkammer, beziehungsweise in der Verbrennungszone, zum Ziel haben, beruht das erfindungsgemäße Verfahren zur Rußherstellung darauf, daß durch unvollständige Verbrennung des Brennstoffes in der Verbrennungszone Kohlenstoffkeime gebildet werden, die mit dem Strom des heißen Abgases in die Reaktionszone transportiert werden und dort eine keiminduzierte Rußbildung mit dem zugeführten Rußrohstoff in Gang setzen. Die angestrebte unvollständige Verbrennung des Brennstoffes bedeutet jedoch nicht, daß der Brennstoff in einem Unterschuß von Sauerstoff verbrannt wird. Vielmehr geht das erfindungsgemäße Verfahren ebenfalls von einem Überschuß an Luft oder sauerstoffhaltigen Gasen in der Brennkammer aus. Dabei können wie bei konventionellen Rußen K-Faktoren zwischen 0,3 und 0,9 angewendet werden. Bevorzugt wird jedoch mit K-Faktoren zwischen 0,6 und 0,7 gearbeitet.

Um trotz des Luftüberschusses Rußkeime zu erzeugen, können verschiedene Wege beschritten werden. Bei einer bevorzugten Variante des erfindungsgemäßen Verfahrens geht man von flüssigen Kohlenwasserstoffen als Brennstoff aus, die anstelle von Erdgas in der Brennkammer des Reaktors mit einem Überschuß an Luft oder sauerstoffhaltigen Gasen verbrannt werden. Flüssige Kohlenwasserstoffe verbrennen langsamer als gasförmige, da sie zuerst in die Gasform überführt, d.h. verdampft werden müssen. Trotz Sauerstoffüberschuß können daher mit flüssigen Kohlenwasserstoffen neben der Verbrennung auch Kohlenstoffkeime produziert werden, die - falls genügend Zeit vorhanden ist und die Temperatur genügend hoch ist - auch wieder verbrennen, oder aber bei rascher Abkühlung zu größeren Rußteilchen wachsen können. Die keiminduzierte Rußbildung beruht darauf, daß man die bei der Verbrennung von flüssigen Kohlenwasserstoffen unter Sauerstoffüberschuß gebildeten Keime unmittelbar mit dem Rußöl in Kontakt bringt und damit das Keimwachstum einleitet.

Eine andere Variante des erfindungsgemäßen Verfahrens verwendet Erdgas als Brennstoff. Eine Keimbildung wird dadurch erreicht, daß die Ausströmungsgeschwindigkeit des Gases aus der beziehungsweise den Brennerlanzen so niedrig gewählt wird, daß man bewußt eine schlechte Einmischung des Erdgases in den heißen Strom der Verbrennungsluft erreicht. Die Bildung von Rußkeimen bei schlecht durchmischten Flammen ist bekannt, wobei man wegen des Aufleuchtens der gebildeten Teilchen auch von leuchtenden Flammen spricht. Bei dieser Verfahrensweise ist es ebenfalls wie bei der Verbrennung von flüssigen Kohlenwasserstoffen wichtig, daß die gebildeten Keime unmittelbar nach der Entstehung mit dem Rußöl in Berührung gebracht werden. Sorgt man durch eine größere Brennkammer beziehungsweise Verbrennungszone dafür, daß sich die Keime mit dem im Überschuß vorhandenen Sauerstoff in der Verbrennungszone umsetzen können, läßt man also eine vollständige Verbrennung in der Verbrennungszone des Rußreaktors zu, so findet keine keiminduzierte Rußbildung statt.

Beide beschriebenen Varianten können auch in vorteilhafter Weise miteinander kombiniert werden. In diesem Fall werden die flüssigen Kohlenwasserstoffe und Erdgas oder andere gasförmige Brennstoffe in geeigneten Verhältnissen gleichzeitig der Verbrennungszone zugeführt. Als flüssige Kohlenwasserstoffe werden bevorzugt Öle, zum Beispiel das Rußöl selber, eingesetzt.

Das erfindungsgemäße Verfahren besteht also darin, daß man in der Verbrennungszone, in welcher bezogen auf die eingesetzten Kohlenwasserstoffe der Sauerstoff im Überschuß vorhanden ist, flüssige und/oder gasförmige Kohlenwasserstoffe als Brennstoffe einsetzt und dafür sorgt, daß sich zum Beispiel durch eine ungenügende Verweilzeit der flüssigen Kohlenwasserstoffe oder durch eine ungenügende Durchmischung der gasförmigen Kohlenwasserstoffe mit der Verbrennungsluft, Rußkeime bilden, die man unmittelbar nach ihrer Entstehung mit dem Rußrohstoff, der bezogen auf die Sauerstoffmenge im Überschuß eingesetzt wird, in der Reaktionszone in Kontakt bringt, das entstehende Ruß-Reaktionsgasgemisch dann durch Eindüsen von Wasser in der Abbruchzone abkühlt und den so entstandenen Ruß in der üblichen Weise weiterverarbeitet.

Somit handelt es sich bei dem erfindungsgemäßen Verfahren um ein Verfahren zur Herstellung von Furnaceruß in einem Rußreaktor, welcher längs der Reaktorachse eine Verbrennungszone, eine Reaktionszone und eine Abbruchzone enthält, durch Erzeugen eines Stromes heißen Abgases in der Verbrennungszone durch Verbrennen eines Brennstoffes in Sauerstoff enthaltenden Gasen und Leiten des Abgases von der Verbrennungszone durch die Reaktionszone in die Abbruchzone, Einmischen des Rußrohstoffes in das heiße Abgas in der Reaktionszone und Abstoppen der Rußbildung in der Abbruchzone durch Einsprühen von Wasser. Das erfindungsgemäße Verfahren ist dadurch gekennzeichnet, daß als Brennstoff Öl, ein Öl/Erdgas-Gemisch oder Erdgas allein verwendet und die Verbrennung des Brennstoffes so geführt wird, daß sich Rußkeime bilden und der Rußrohstoff unmittelbar mit diesen Rußkeimen in Kontakt gebracht wird.

Das beschriebene Verfahren ist nicht auf eine bestimmte Reaktorgeometrie beschränkt. Es kann vielmehr auf verschiedene Reaktortypen und Reaktorgrößen angepaßt werden. Die gewünschte Keimbildung in der Verbrennungszone kann der Fachmann durch verschiedene Maßnahmen einstellen. Mögliche Einflußgrößen zur Optimierung der Keimbildung bei Verwendung von Öl als Brennstoff sind das Verbrennungsluft/Öl-Massenverhältnis, die Art des verwendeten Zerstäubers für den Brennstoff und die Größe der zerstäubten Öltröpfchen. Als Brennstoff-Zerstäuber können sowohl reine Druckzerstäuber (Einstoffzerstäuber) als auch Zweistoffzerstäuber mit innerer oder äußerer Mischung eingesetzt werden, wobei als Zerstäubungsmedium Preßluft, Wasserdampf, Wasserstoff, ein Inertgas oder auch ein Kohlenwasserstoffgas verwendet werden kann. Die vorstehend beschriebene Kombination eines flüssigen mit einem gasförmigen Brennstoff kann also zum Beispiel durch Verwendung des gasförmigen Brennstoffs als Zerstäubungsmedium für den flüssigen Brennstoff realisiert werden.

Bevorzugt werden zur Zerstäubung von flüssigem Brennstoff Zweistoffzerstäuber eingesetzt. Während bei Einstoffzerstäubern eine Änderung des Durchsatzes auch zu einer Änderung der Tröpfchengröße führt, kann die Tröpfchengröße bei Zweistoffzerstäubern weitgehend unabhängig vom Durchsatz beeinflußt werden.

Die Größe der zerstäubten Tröpfchen muß so eingestellt werden, daß an der Stelle der Injektion des Rußöles noch genügend Rußkeime zur Verfügung stehen. Die optimale Tröpfchengröße ist abhängig von der Geometrie des gewählten Reaktors. Bei dem in den Beispielen verwendeten Reaktor haben sich mittlere Tröpfchendurchmesser im Bereich zwischen 50 und 100 µm bewährt. Diese Werte wurden mit Hilfe der Zerstäubung von Wasser ermittelt. Die optimale Einstellung des Zerstäubers erfolgt jedoch am besten empirisch am Reaktor unter Beobachtung des Flammbildes. Eine zu feine Zerstäubung des flüssigen Brennstoffes führt zur vollständigen Verbrennung der Tröpfchen ohne Keimbildung. Zu große Tröpfchen führen zu Koksbildung und zu einer instabilen Flamme. Eine gute Keimbildung liegt bei leicht rußender Flamme vor.

Als Rußrohstoff können die sogenannten Rußöle allein oder in Kombination mit kohlenwasserstoffhaltigen Gasen, insbesondere Erdgas, verwendet werden. Geeignete Rußöle sind petrochemische Öle (Steam-Cracker-Öle, Cat-Cracker-Öle), carbochemische Öle (Steinkohleteer-Öl) und Pyrolyse-Öle mit einem BMC-Index größer als 130. Diese Öle werden ebenso wie im Falle der flüssigen Brennstoffe bevorzugt mit Zweistoffzerstäubern zerstäubt.

Mit dem erfindungsgemäßen Verfahren kann die gesamte Palette der industriellen Furnaceruße hergestellt werden. Dem Fachmann sind die hierfür notwendigen Maßnahmen wie zum Beispiel die Einstellung der Verweilzeit in der Reaktionszone und die Zugabe von Additiven zur Beeinflussung der Rußstruktur bekannt. Es wurde gefunden, daß die mit dem erfindungsgemäßen Verfahren hergestellten Ruße sich bei gleichen rußanalytischen Kenndaten in signifikanter Weise von konventionellen Rußen unterscheiden. Bei Einarbeitung in SSBR/BR-Gummimischungen verleihen diese Ruße der resultierenden Gummimischung ein tanδ₀tanδ₆₀/tanδ₆₀-Verhältnis welches größer ist als bei konventionellen Rußen, wobei gleichzeitig der tanδ₆₀-Wert unter dem entsprechenden Wert für ASTM-Ruße mit gleicher CTAB-Oberfläche und 24M4-DBP Absorption liegt. Diese Beobachtung gilt für Ruße mit CTAB-Werten zwischen 60 und 180 m²/g, insbesondere für Ruße mit CTAB-Werten zwischen 80 und 140 m²/g, sowie 24M4-DBP-Absorptionswerten zwischen 80 und 140 ml/100 g.

Durch eingehende Untersuchungen hat sich gezeigt, daß bei Auftragung des tanö-Verhältnisses über der CTAB-Oberfläche die erfindungsgemäßen Ruße über einer Grenzgeraden liegen, die gegeben ist durch die Beziehung

tanδ₀/tanδ₆₀ = 2,76 - 6,7 x 10⁻³ x CTAB.

Alle konventionellen Ruße liegen unterhalb dieser Geraden.

Die erfindungsgemäßen Ruße verleihen den SSBR/BR-Gummischungen eine stärkere Temperaturabhängigkeit von tanδ. Neben diesem im folgenden als Inversion bezeichneten Effekt können die erfindungsgemäßen Ruße eine verbreiterte Aggregatgrößenverteilung aufweisen. Weiterhin zeichnen sich die erfindungsgemäßen Ruße gegenüber den konventionellen Rußen dadurch aus, daß sie bei gleicher CTAB-Oberfläche eine geringere Schwarzzahl M_{y}, gemessen nach DIN 55979, aufweisen. Ihr dynamischer Dehnmodul |E*| bei 0°C ist in der Regel geringer als der Dehnmodul der Vergleichsruße.

Die keiminduzierte Rußbildung wirkt sich auch auf die Strukturierung der Oberfläche der Rußteilchen aus. Durch Untersuchungen mit Hilfe der Atomic Force Microscopy (AFM) wurde gefunden, daß die erfindungsgemäßen Ruße eine rauhere Oberfläche aufweisen als die aus dem Stand der Technik bekannten Ruße.

Die Erfindung wird nun anhand einiger Beispiele näher erläutert. Es zeigen
- Figur 1:: einen Längsschnitt durch den für die Herstellung der erfindungsgemäßen Ruße benutzten Reaktor.
- Figur 2:: Ein Diagramm des Verhältnisses tanδ₀/tanδ₆₀ über der CTAB-Oberfläche für verschiedene erfindungsgemäße Ruße und konventionelle Vergleichsruße.
- Figur 3:: die Schwarzzahl M_{y} über der CTAB-Oberfläche für dieselben Ruße wie in Figur 2.
- Figur 4:: den dynamischen Dehnmodul |E*| bei 0°C für dieselben Ruße wie in Figur 2.

### Beispiele 1 bis 6

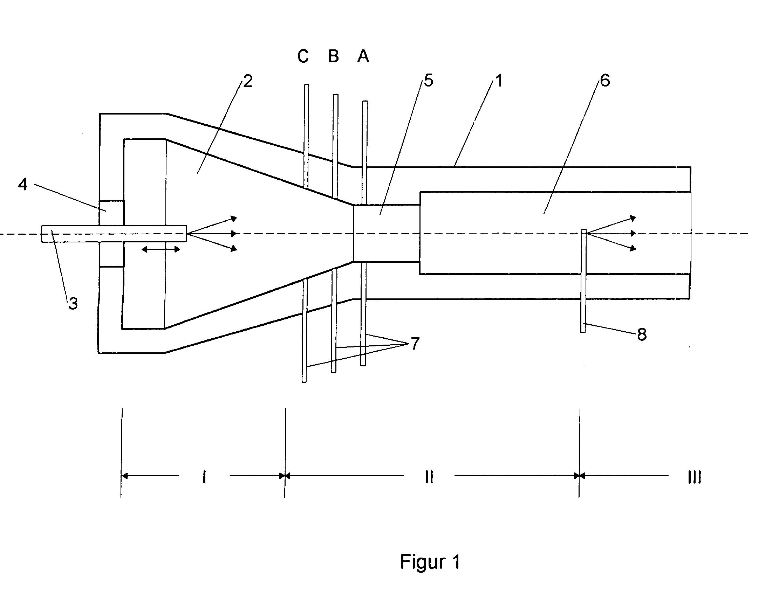

Es wurde eine Reihe von erfindungsgemäßen Rußen in dem in Figur 1 dargestellten Rußreaktor 1 hergestellt. Er besitzt eine Brennkammer 2, in der das heiße Abgas für die Pyrolyse des Rußöles durch Verbrennen von Öl unter Zufuhr von einem Überschuß an Luftsauerstoff erzeugt wird. Der Brennstoff wird über die axiale Brennerlanze 3 in die Brennkammer eingeführt. Die Brennerlanze kann zur Optimierung der keiminduzierten Rußbildung in axialer Richtung verschoben werden.

Die Zufuhr der Verbrennungsluft erfolgt über die Öffnung 4 in der Stirnwand der Brennkammer. Die Brennkammer läuft konisch auf die Engestelle 5 zu. Nach Durchqueren der Engstelle expandiert das Reaktionsgasgemisch in die Reaktionskammer 6.

Mit A, B und C sind verschiedene Positionen für die Injektion des Rußöles in das heiße Prozeßgas mittels der Öllanzen 7 bezeichnet. Die Öllanzen weisen an ihrem Kopf geeignete Sprühdüsen auf. An jeder Injektionsposition sind 4 Injektoren über den Umfang des Reaktors verteilt.

Die für das erfindungsgemäße Verfahren wichtige Verbrennungszone, Reaktionszone und Abbruchzone sind in Figur 1 durch die römischen Ziffern I bis III gekennzeichnet. Sie können nicht scharf voneinander getrennt werden. Ihre axiale Ausdehnung hängt von der jeweiligen Positionierung der Brennerlanze, der Öllanzen und der Quenchwasser-Lanze 8 ab.

Die Abmessungen des verwendeten Reaktors sind der folgenden Aufstellung zu entnehmen:

| | | |
|---|---|---|
| Größter Durchmesser der Brennkammer: | | 900 mm |
| Länge der Brennkammer bis Engstelle: | | 1390 mm |
| Länge des konischen Teils der Brennkammer: | | 1160 mm |
| Durchmesser der Engstelle: | | 140 mm |
| Länge der Engstelle: | | 230 mm |
| Durchmesser der Reaktionskammer: | | 250 mm |
| Position der Öllanzen ¹⁾ | A: | 110 mm |
| | B: | - 150 mm |
| | C: | - 320 mm |
| Position der Quenchwasserlanze(n) ¹⁾ | | ≈ 1000 - 5500 mm |

| | | |
|---|---|---|
| ¹⁾ gemessen vom Eintritt in die Engstelle (+: nach Eintritt - : vor Eintritt) | | |

Alle in dem beschriebenen Reaktor hergestellten Ruße wurden vor der Charakterisierung und Einarbeitung in die Gummimischungen nach den üblichen Verfahren naß geperlt.

Zur Herstellung der erfindungsgemäßen Ruße wurden als Brennstoff und als Rußöl ein Rußöl mit einem BMC-Index von 160 verwendet, welches die in Tabelle 1 zusammengestellten Eigenschaften aufwies.

**Tabelle 1**

| Eigenschaften des Rußöles | |
|---|---|
| **Eigenschaft** | **Gehalt** |
| Kohlenstoffgehalt [Gew.-%] | 93,4 |
| Wasserstoffgehalt [Gew.-%] | 5,9 |
| Schwefelgehalt [Gew.-%] | 0,6 |
| Destillatmenge bis 275°C [Vol.%] | 7,5 |
| Destillatmenge bis 300°C [Vol.%] | 17,2 |
| Destillatmenge bis 400°C [Vol.%] | 83,9 |
| destillierbare Bestandteile [Vol.%] | 97,9 |

Die Reaktorparameter für die Herstellung der 6 erfindungsgemäßen Ruße sind in Tabelle 2 aufgeführt. Während in den Beispielen 1 bis 5 als Rußrohstoff nur Rußöl eingesetzt wurde, wurde in Beispiel 6 mit einer Kombination von Rußöl und Erdgas gearbeitet, wobei das Rußöl mit Hilfe des Erdgases zerstäubt wurde.

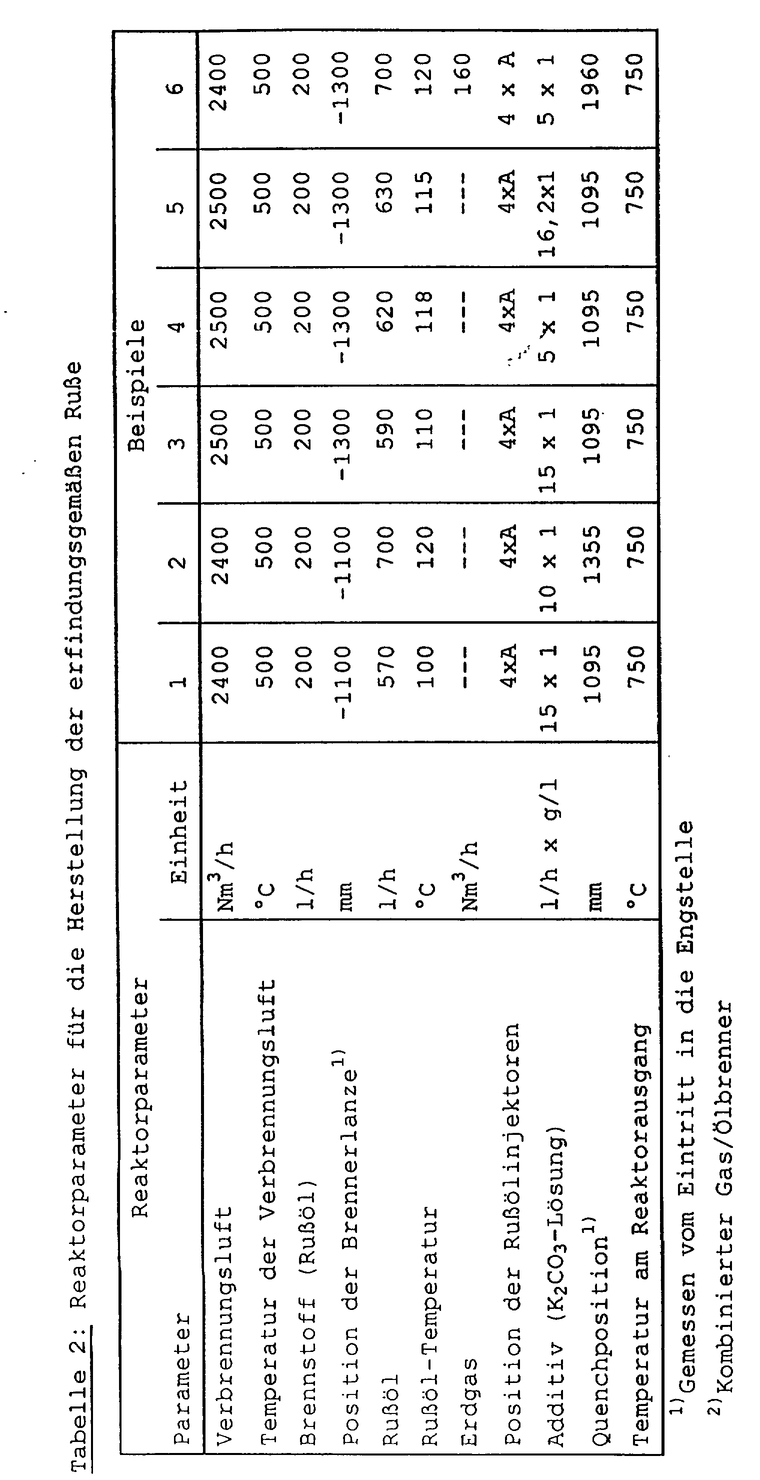

### Bestimmung der rußanalytische Kenndaten:

An den erfindungsgemäßen Rußen wie auch an einigen kommerziellen Vergleichsrußen wurden die üblichen rußanalytischen Kenndaten nach den folgenden Normen ermittelt:
- CTAB-Oberfläche:: ASTM D-3765
- Jod-Adsorption:: ASTM D-1510
- DBP-Absorption:: ASTM D-2414
- 24M4-DBP-Absorption:: ASTM D-3493
- Schwarzzahl M_{y}: DIN 55979

### Bestimmung der viskoelastischen Eigenschaften:

Die Bestimmung der viskoelastischen Eigenschaften der mit diesen Rußen verstärkten Gummimischungen wurde nach DIN 53513 vorgenommen. Es wurden insbesondere die Verlustfaktoren tanδ bei 0°C und bei 60°C sowie der dynamische Dehnmodul |E*| bei 0°C bestimmt. Die für die Gummimischungen verwendete Testrezeptur ist in Tabelle 3 aufgeführt.

**Tabelle 3**

| SSBR/BR-Testrezeptur | |
|---|---|
| Kautschuk-Komponente | Gehalt [phr] |
| SSBR | 96,0 |
| BR | 30,0 |
| Ruß | 80,0 |
| ZnO RS | 3,0 |
| Stearinsäure | 2,0 |
| aromatisches Öl | 10,0 |
| 6 PPD | 1,5 |
| Wachs | 1,0 |
| CBS | 1,5 |
| Schwefel | 1,5 |

Bei der SSBR Kautschukkomponente handelt es sich um ein in Lösung polymerisiertes SBR-Copolymer mit einem Styrolgehalt von 25 Gew.-% und einem Butadiengehalt von 75 Gew.-%. Von dem Butadien sind 73 Gew.-% 1,2, 10 Gew.-% cis 1,4 und 17 Gew.-% trans 1,4 verknüpft. Das Copolymer enthält 37,5 phr Öl und wird unter dem Handelsnamen Buna® VSL 1955 S 25 von Bayer AG vertrieben. Seine Mooney-Viskosität (ML 1+4/100°C) beträgt etwa 50.

Bei der BR Kautschukkomponente handelt es sich um ein cis 1,4-Polybutadien (Titantyp) mit einem cis 1,4-Gehalt von 92 Gew.-%, einem trans 1,4-Gehalt von 4 Gew.-%, einem 1,2-Gehalt von 4 Gew.-% und einer Mooney-Viskosität zwischen 44 und 50. Diese Komponente wird unter dem Handelnamen Buna® CB 11 S von der Bayer AG vertrieben.

Als aromatisches Öl wurde Naftolen® ZD von Chemetall verwendet. Bei dem PPD-Anteil der Testrezeptur handelte es sich um Vulkanox® 4020 und bei dem CBS-Anteil um Vulkacit® CZ, beide von der Bayer AG. Als Wachs wurde Protector® G35 von der HB-Fuller GmbH eingesetzt.

Die Einarbeitung der Ruße in die Gummimischung wurde in drei Stufen entsprechend der folgenden tabellarischen Aufstellung vorgenommen:

| **Stufe 1** | |
|---|---|
| **Einstellungen** | |
| Mischaggregat | Werner & Pfleiderer GK 1,5 N |
| Friktion | 1:1,11 |
| Drehzahl | 70 min⁻¹ |
| Stempeldruck | 5,5 bar |
| Leervolumen | 1,6 l |
| Füllgrad | 0,7 |
| Durchflußtemp. | 80°C |

| **Mischvorgang** | |
|---|---|
| 0 bis 1 min | Buna VSL 1955 S25 + Buna CB 11S |
| 1 bis 2 min | 1/2 Ruß + ZnO RS + Stearinsäure + Naftolen ZD |
| 2 bis 3 min | 1/2 Ruß + Vulkanox 4020 + Protector G35 |
| 3 min | säubern |
| 3 bis 3,5 min | mischen und ausfahren |
| | |
| Batch-Temp. | 140-160°C |
| Lagerung | 24 h bei Raumtemperatur |

| **Stufe 2** | |
|---|---|
| **Einstellungen** | |
| Mischaggregat | wie in Stufe 1 bis auf |
| Füllgrad | 0,68 |

| **Mischvorgang** | |
|---|---|
| 0 bis 2 min | Batch von Stufe 1 aufbrechen |
| 2 min | ausfahren |
| | |
| Batch-Temp. | <150°C |
| Lagerung | keine |

| **Stufe 3** | |
|---|---|
| **Einstellungen** | |
| Mischaggregat | wie in Stufe 1 bis auf |
| Füllgrad | 0,65 |

| **Mischvorgang** | |
|---|---|
| 0 bis 1,5 min | Batch von Stufe 2 + Vulkacit CZ + Schwefel |
| 1,5 min | ausfahren und auf Labormischwalzwerk |
| | (Durchmesser 200 mm, Länge 450 mm, |
| | Durchflußtemperatur 50°C) Fell bilden. |
| | Zum Homogenisieren dann: |
| | 3 x links und 3 x rechts einscheiden und |
| | umklappen sowie |
| | 8 x bei engem Walzenspalt (1 mm) und 3 x |
| | bei breitem Walzenspalt (3,5 mm) stürzen |
| | und anschließend Fell ausziehen. |

Die anschließende Bestimmung der viskoelastischen Eigenschaften erfolgte dann an jeweils fünf Probekörpern aus den obigen Gummimischungen unter folgenden Bedingungen:

**Tabelle 4**

| Bestimmung der viskoelastischen Eigenschaften gemäß DIN 53513 | |
|---|---|
| **Vulkanisation der Probenkörper** | |
| Vulkanisations-Temperatur | 165°C |
| Vulkanisations-Dauer | T₉₅ + 3 min (T₉₅:DIN 53529) |

| **Probenkörperform** | |
|---|---|
| Form | zylindrisch |
| Länge | 10 mm |
| Durchmesser | 10 mm |
| Anzahl | 5 |

| **Prüfmaschine** | |
|---|---|
| Typ/Hersteller | 830/MTS |
| Art der Beanspruchung | Dehnung |
| Mittlere Kraftamplitude | 50 N |
| Dynamische Kraftamplitude | ± 25 N |
| Prüffrequenz | 16 Hz |
| **Prüfablauf** | 5 min temperieren dann |
| | dynamische Belastung bei |
| | 16 Hz für die Dauer von 2 min |
| | mit nachfolgender Messung |

Verwendet wird jeweils der Medianwert der Messungen an den fünf Probekörpern.

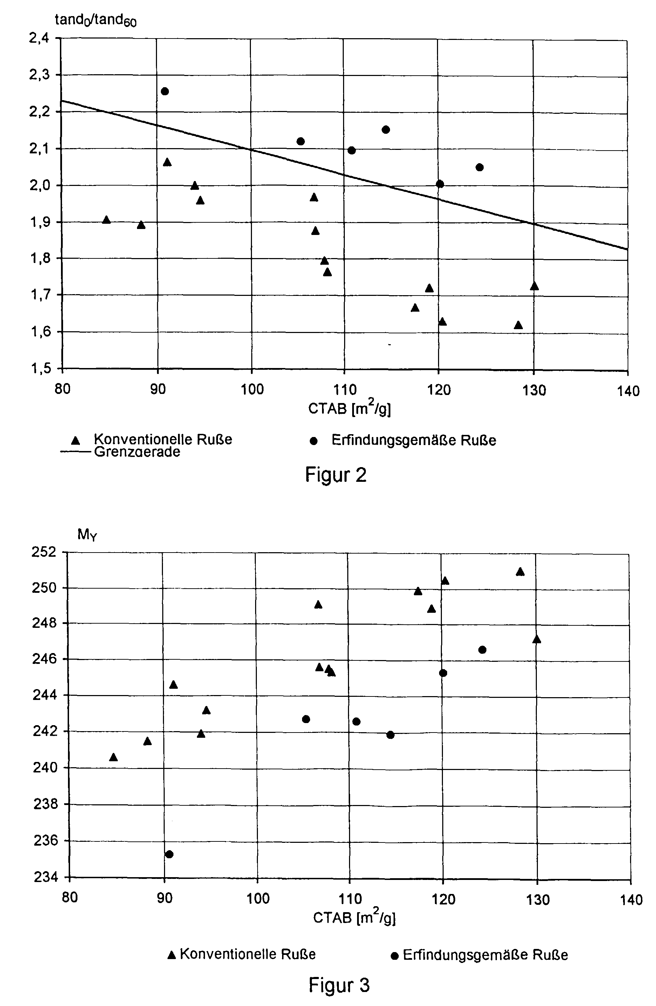

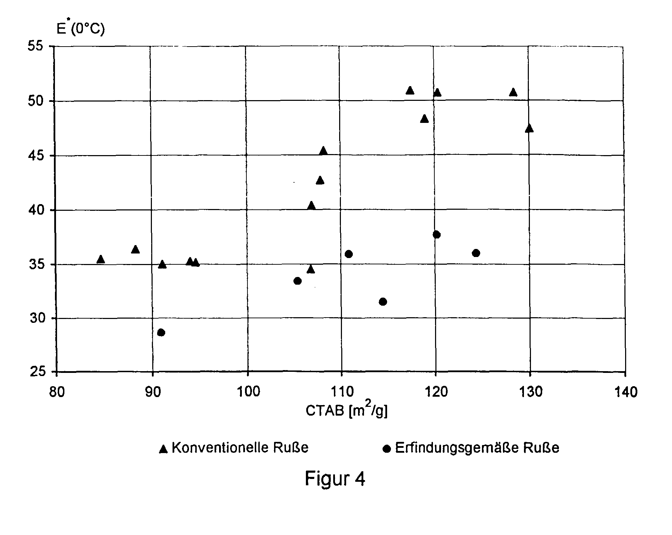

Die Ergebnisse der viskoelastischen Untersuchungen sind in Tabelle 5 aufgelistet und in den Figuren 2 bis 4 grafisch dargestellt. Es wurden insgesamt 14 kommerzielle Vergleichsruße, in Tabelle 5 mit V1 bis V14 bezeichnet, und 6 erfindungsgemäße Ruße aus den Beispielen 1 bis 6, in Tabelle 5 mit B1 bis B6 bezeichnet, untersucht.

Tabelle 5 enthält für die Vergleichsruße, soweit bekannt, noch deren ASTM-Klassifizierung.

In Tabelle 5 sind die Ruße nach aufsteigender CTAB-Oberfläche geordnet. In Figur 2 ist für diese Ruße ihr Verhältnis tanδ₀/tanδ₆₀ über der CTAB-Oberfläche aufgetragen. Die erfindungsgemäßen Ruße zeigen bei gleicher CTAB-Oberfläche ein deutlich größeres tanδ-Verhältnis, also ein steileres Temperaturprofil des Verlustfaktors. Dies gilt insbesondere auch im Vergleich zu den beiden lh-Rußen (V3 und V4) in Tabelle 5, bei denen es sich um Ruße gemäß EP 0 315 442 handelt. Bei den lh-Rußen konnte kein steileres Temperaturprofil des Verlustfaktors festgestellt werden.

Der Bereich der erfindungsgemäßen Ruße läßt sich klar von den konventionellen Rußen abgrenzen. Er liegt oberhalb der in Figur 2 dargestellten Grenzgeraden, welche durch die Beziehung

tanδ₀/tanδ₆₀ = 2,76 - 6,7 x 10⁻³ x CTAB

gegeben ist.

Für die erfindungsgemäßen Ruße ist es weiterhin charakteristisch, daß sie bei gleicher CTAB-Oberfläche und ähnlicher 24M4 DBP-Absorption wie die Vergleichsruße zu einem niedrigeren Verlustfaktor tanδ₆₀ und im allgemeinen zu einem niedrigeren dynamischen Dehnmodul der Gummimischungen führen und auch eine geringere Schwarzzahl besitzen.

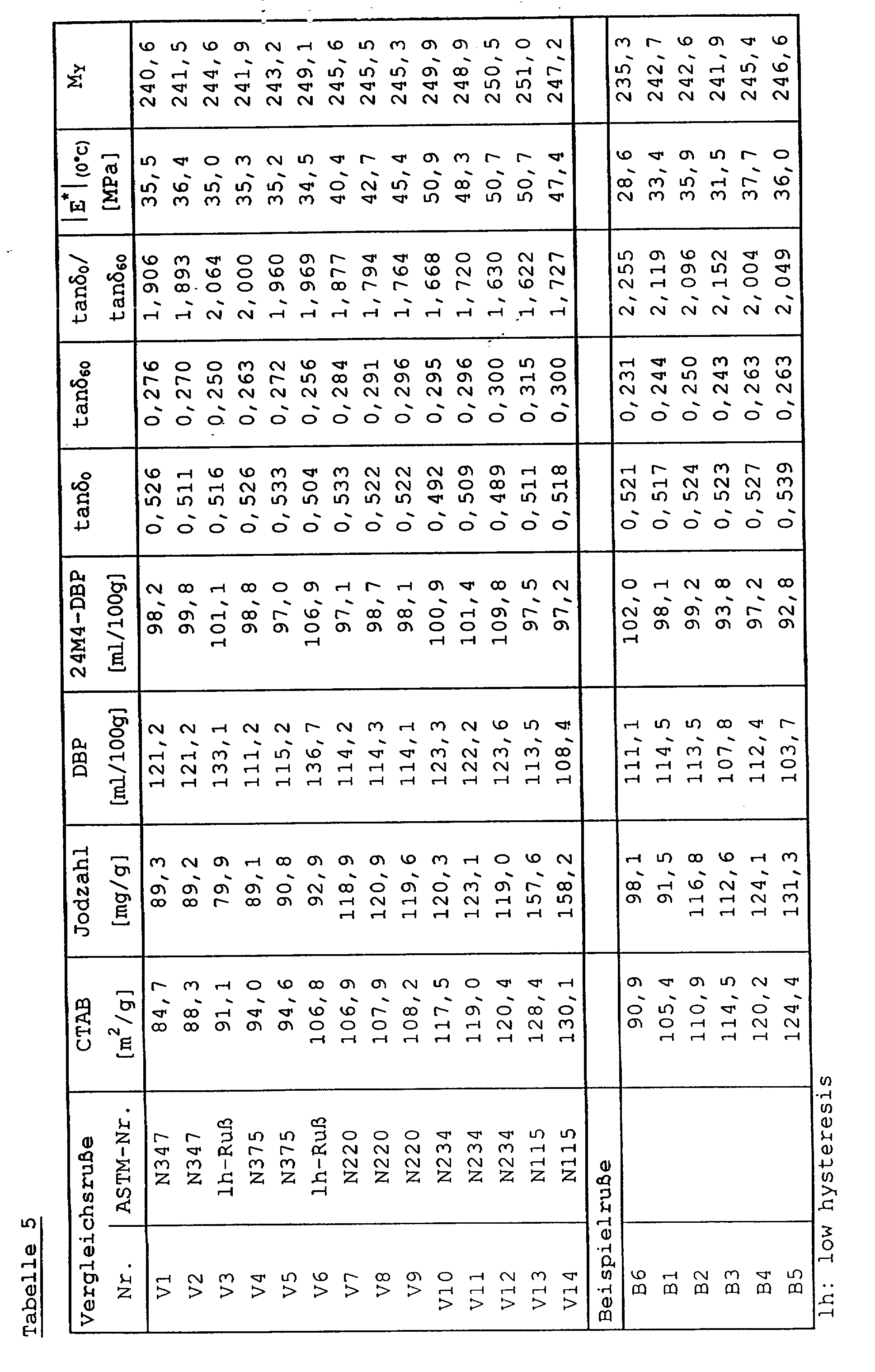

## Patentansprüche

1. Furnaceruß mit CTAB-Werten (ASTM D-3765) zwischen 80 und 180 m²/g und 24M4-DBP Absorption (ASTM D-3493) zwischen 80 und 140 ml/100g,
**dadurch gekennzeichnet,**
daß für sein tanδ₀/tanδ₆₀-Verhältnis(DIN 53513) bei Einarbeitung in eine SSBR/BR-Gummimischung die Beziehung gilt
tanδ₀/tanδ₆₀ > 2,76 - 6,7 x 10⁻³ x CTAB
und der tanδ₆₀-Wert stets niedriger ist als der Wert für ASTM-Ruße mit gleicher CTAB-Oberfläche und 24M4-DBP Absorption.

2. Verfahren zur Herstellung von Furnaceruß nach Anspruch 1 in einem Rußreaktor, welcher längs der Reaktorachse eine Verbrennungszone, eine Reaktionszone und eine Abbruchzone enthält, durch Erzeugen eines Stromes heißen Abgases in der Verbrennungszone durch Verbrennen eines Brennstoffes in einem Sauerstoff enthaltenden Gas und Leiten des Abgases von der Verbrennungszone durch die Reaktionszone in die Abbruchzone, Einmischen eines Rußrohstoffes in das heiße Abgas in der Reaktionszone und Abstoppen der Rußbildung in der Abbruchzone durch Einsprühen von Wasser,
**dadurch gekennzeichnet,**
daß als Brennstoff Öl, ein Öl/Erdgasgemisch oder Erdgas allein verwendet und die Verbrennung des Brennstoffes so geführt wird, daß sich Keime in einer leicht rußenden Flamme bilden und der Rußrohstoff unmittelbar mit diesen Rußkeimen in Kontakt gebracht wird.

3. Verwendung des Furnaceruß nach Anspruch 1 für die Herstellung von Gummimischungen für Reifen-Laufflächen.

## Claims

1. Furnace black having CTAB values (ASTM D-3765) of between 80 and 180 m²/g and 24M4-DBP absorption (ASTM D-3493) of between 80 and 140 ml/100g,
characterised in that
the equation
tanδ₀/tanδ₆₀ > 2.76 - 6.7 x 10⁻³ x CTAB
applies for the tanδ₀/tanδ₆₀ ratio (DIN 53513) thereof upon incorporation into an SSBR/BR rubber mixture and the tanδ₆₀ value is always lower than the value for ASTM blacks with the same CTAB surface area and 24M4-DBP absorption.

2. A process for producing furnace black according to claim 1 in a carbon black reactor, which comprises, along the reactor axis, a combustion zone, a reaction zone and a termination zone, by producing a stream of hot exhaust gas in the combustion zone by burning a fuel in a gas containing oxygen and conveying the exhaust gas from the combustion zone through the reaction zone into the termination zone, incorporating a carbon black raw material into the hot exhaust gas in the reaction zone and stopping carbon black formation in the termination zone by spraying water therein,
characterised in that
oil, an oil/natural gas mixture or natural gas alone is used as the fuel and combustion of the fuel proceeds in such a way that nuclei form in a slightly smoking flame and the carbon black raw material is brought directly into contact with these carbon black nuclei.

3. Use of the furnace black according to claim 1 for producing rubber mixtures for tyre treads.

## Revendications

1. Noir de four ayant des valeurs CTAB (norme ASTM D-3765) comprises entre 80 et 180 m²/g et une absorption 24M4-DBP (norme ASTM D-3493) comprise entre 80 et 140 ml/100 g, caractérisé en ce que
• pour son rapport tanδ₀/tanδ₆₀ (norme DIN 53513), en cas d'intégration dans un mélange du caoutchouc SSBR/BR, il répond à l'équation
tanδ₀/tanδ₆₀ > 2,76 - 6,7 x 10 ⁻³ x CTAB
• la valeur de tangδ₆₀ est toujours inférieure à la valeur pour le noir de fumée ASTM de même surface CTAB et de même absorption 24M4-DPB.

2. Procédé de fabrication de noir de four selon la revendication 1 dans un réacteur à noir de fumée, qui contient le long de l'axe du réacteur une zone de combustion, une zone de réaction et une zone de rupture, par production d'un courant de gaz d'échappement chaud dans la zone de combustion au moyen de la combustion d'un combustible dans un gaz contenant de l'oxygène et par la conduite du gaz usé de la zone de combustion à travers la zone de réaction dans la zone de rupture, par mélange d'une matière première de noir de fumée dans le gaz d'échappement chaud dans la zone de réaction et par arrêt de la formation de noir de fumée dans la zone de rupture par pulvérisation d'eau, caractérisé en ce qu'
• on utilise comme combustible de l'huile, un mélange huile/gaz naturel, ou du gaz naturel seul, et
• on conduit la combustion du combustible de manière telle qu'il se forme des germes dans une flamme légèrement fuligineuse, et que la matière première du noir de fumée soit immédiatement mise en contact avec ces germes de noir de fumée.

3. Utilisation du noir de four selon la revendication 1 pour la fabrication de mélanges de caoutchoucs pour surfaces de roulement de pneus.
